# EUROPÄISCHE PATENTSCHRIFT

(11) **EP 0 400 409 B1**
(45) Veröffentlichungstag und Bekanntmachung des Hinweises auf die Patenterteilung: **24.08.1994**
(21) Anmeldenummer: 90109396.3
(22) Anmeldetag: 18.05.1990
(51) Int. Cl.: C08G 65/40

(54) **Aromatische Copolyetherketone**
Aromatic copolyetherketones
Copolyéthercétones aromatiques

(30) Priorität: 31.05.1989 DE 3917628
(43) Veröffentlichungstag der Anmeldung: 05.12.1990
(73) Patentinhaber: BAYER AG, 51368 Leverkusen (DE)
(72) Erfinder: Reuter, Knud, Dr., D-4150 Krefeld (DE); Jilge, Wolfgang, Dr., D-5060 Bergisch-Gladbach 2 (DE); Pittel, Bernd, Dr., D-5138 Heinsberg (DE); Weymans, Günther, Dr., D-5090 Leverkusen 1 (DE)

(56) Entgegenhaltungen:
- EP-A- 0 364 741
- DE-A- 1 545 106
- US-A- 3 761 449
- Polymer Science USSR vol. 14, 1972, Seiten 2962 - 2970; S. V. VINOGRADOVA ETAL.: "Aromatic polyethers of the "cardic" type"
- Polymer Bulletin vol. 20, 1988, Seiten 511 - 516; G. QIPENG ET AL.: "Epoxy-terminated phenolphthalein poly ether ether ketone reactive oligomers: curewith 4,4'-diaminodiphenylether"

## Beschreibung

Die Erfindung betrifft aromatische Polyetherketone (und ein Verfahren zu ihrer Herstellung) auf Basis von 5 bis 90 Mol-%, bezogen auf die Gesamtmenge aller Bisphenole, Dihydroxydiphenylcycloalkanen der Formel (I) 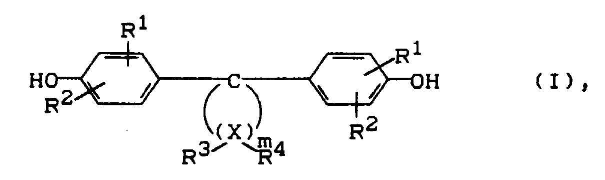
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl und C₇-C₁₂-Aralkyl, bevorzugt Phenyl-C₁-C₄-alkyl-, insbesondere Benzyl und Cumyl
- m: eine ganze Zahl von 4 bis 7, bevorzugt 4 oder 5,
- R³ und R⁴: für jedes X individuell wählbar, unabhängig voneinander Wasserstoff, C₁-C₆-Alkyl und
- X: Kohlenstoff bedeuten,
mit der Maßgabe, daß an mindestens einem Atom X R³ und R⁴ gleichzeitig Alkyl bedeuten,
und 10 bis 95 Mol-% bezogen auf die Gesamtmenge aller Bisphenole Phthaleinen der Formel (II), worin R⁵ bis R⁸ die für R¹ und R² oben genannte Bedeutung haben (jedoch unabhängig von R¹ und R²). 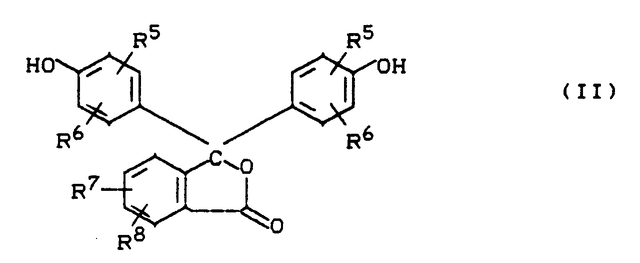
In Formel (I) sind bevorzugt an 1-2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substitutierten C-Atom (C-1) sind bevorzugt nicht dialkyl-substitutiert, dagegen ist die Alkyl-di-substitution in β-Stellung zu C-1 bevorzugt. In Formel II ist R⁷ und R⁸ bevorzugt Wasserstoff.

Besonders bevorzugt als Ausgangsmaterial gemäß Formel (I) sind Dihydroxydiphenylcycloalkane mit 5 bis 6 Ring-C-Atomen im cycloaliphatischen Rest [m = 4 oder 5 in Formel (I)], beispielsweise die Diphenole der Formeln 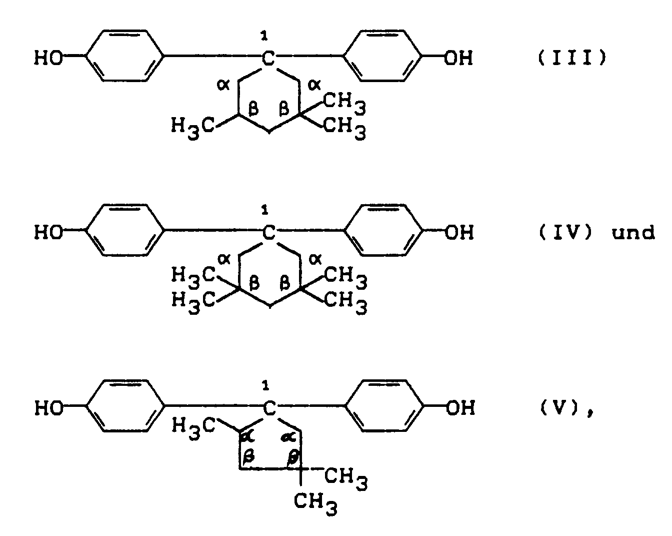
wobei das 1,1-Bis-(4-hydroxyphenyl)-3.3.5-trimethylcyclohexan (Formel III) besonders bevorzugt ist. Besonders bevorzugtes Ausgangsmaterial der Formel (II) ist Phenolphthalein (R⁵-R⁸ = Wasserstoff).

Dihydroxydiphenylcycloalkane der Formel (I) können in an sich bekannter Weise durch Kondensation von Phenolen der Formel (VI) 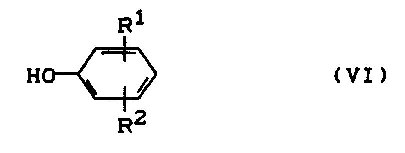
und Ketonen der Formel (VII) 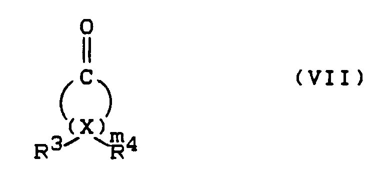
hergestellt werden, wobei in den Formeln (VI) und (VII) X, R¹, R², R³, R⁴ und m die für Formel (I) angegebene Bedeutung haben.

Die Phenole der Formel (VI) sind entweder bekannt oder nach bekannten Verfahren erhältlich (vgl. z.B. Ullmann, Encyklopädie der technischen Chemie, 4. Auflage, Band 15, S. 61-77).

Beispiele für geeignete Phenole der Formel (VI) sind: Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol, o-Phenylphenol und o- oder p-Benzylphenole.
Die Ketone der Formel (VII) sind bekannt (siehe beispielsweise Beilsteins Handbuch der organischen Chemie, 4. Auflage, Band 7; ein allgemeines Verfahren zur Herstellung von Ketonen der Formel (VII) ist beispielsweise in "Organikum", 15. Auflage 1977, VEB-Deutscher Verlag der Wissenschaften, Berlin, S. 698, beschrieben.

Beispiele für bekannte Ketone der Formel (VII) sind:
3,3-Dimethylcyclopentanon, 2,2-Dimethylcyclohexanon, 3,3-Dimethylcyclohexanon, 4,4-Dimethylcyclohexanon, 3-Ethyl-3-methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone der Formel (VII) sind 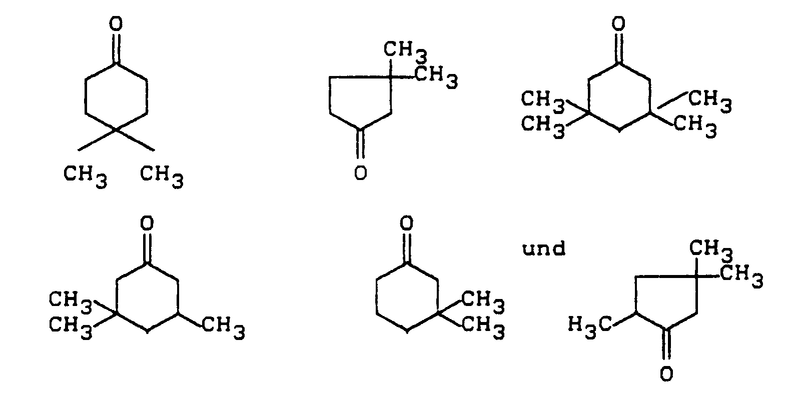
Zur Bisphenolherstellung werden im allgemeinen 2 bis 10 Mol, vorzugsweise 2,5 bis 6 Mol Phenol der Formel (VI) pro Mol Keton der Formel (VII), verwendet. Bevorzugte Reaktionszeiten sind 1 bis 100 Stunden. Im allgemeinen arbeitet man bei Temperaturen von -30°C bis 300°C, vorzugsweise von -15°C bis 150°C und bei Drucken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiter kann die Umsetzung durch Zugabe von Co-Katalysatoren wie C₁-C₁₈-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen; dies ist jedoch zur Erzielung guter Umsätze dann vorteilhaft, wenn der eingesetzte Katalysator das Reaktionswasser nicht bindet.

Geeignete wasserentziehende Mittel sind beispielsweise: Acetanhydrid, Zeolithe, Polyphosphorsäure und Phosphorpentoxid.

Die Herstellung der Diphenole entsprechend Formel (I), ist in der Deutschen Offenlegungsschrift 38 32 396 beschrieben.

Die Phthaleine der Formel (II) sind bekannt, z.B. aus Ullmann's Encyclopädie der techn. Chemie, 3. Auflage (1957), Bd. 8, S. 766-767. Sie können z.B. nach US-PS 2 522 940 oder Z. anorg. allgem. Chem. 178, S. 49 ff. (1929) hergestellt werden.

Von Phthaleinen abgeleitete aromatische Polyetherketone sind bekannt (z.B. Polymer Science USSR, 14, 2962 (1972).).

Geeignete Phthaleine der Formel (II) sind z.B. Phenolphthalein, die verschiedenen isomeren Kresolphthaleine, Xylenolphthaleine, Thymolphthaleine. Bevorzugt wird Phenolphthalein.

Gegenstand dieser Erfindung sind aromatische Polyetherketone mit der wiederkehrenden Struktureinheit

-O-E-O-E'- (VIII)

worin
- -E'-: ein zweibindiger Rest eines aromatischen Ketons der Formel (IXa) 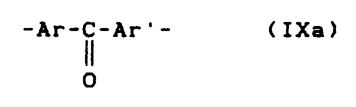 mit
- Ar und Ar': als gleichen oder verschiedenen difunktionellen aromatischen Rest mit 6 bis 50 C-Atomen
und worin

-O-E-O- (Xa)

ein zweibindiger Diphenolat-Rest ist, die dadurch gekennzeichnet sind, daß 5 bis 90 Mol-%, vorzugsweise 20 bis 80 Mol-% und insbesondere 30 bis 75 Mol-% der Diphenolat-Reste der Formel (Xa) solche der Formel (Ia) 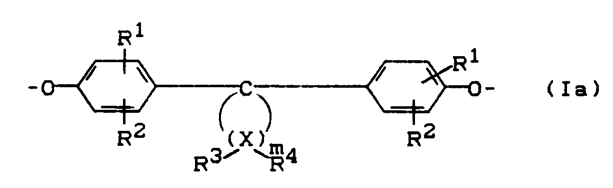
sind, in denen X, R¹, R², R³, R⁴ und m wie in Formel (I) definiert sind, und daß 10 bis 95 Mol-%, vorzugsweise 20 bis 80 Mol-% und insbesondere 25 bis 70 Mol-% der Diphenolat-Reste der Formel (Xa) solche der Formel (IIa) sind, 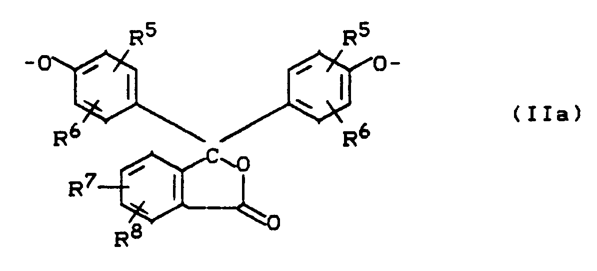
in der R⁵, R⁶, R⁷ und R⁸ wie in Formel (II) definiert sind.

Die aromatischen Polyetherketone der Erfindung haben bevorzugt mittlere Molekulargewichte M̅_{w} (Gewichtsmittel), ermittelt z. B. durch Gelpermeationschromatographie oder Lichtstreuung von 1000 bis 500.000, vorzugsweise von 3.000 bis 200.000 und insbesondere von 5.000 bis 100.000.

Aromatische Polyetherketone sind bekannt (siehe beispielsweise GB-PS 1 078 234, US-PS 4 010 147 und EP-A 0 135 938). Sie können beispielsweise durch Umsetzung von Dialkalisalzen von Diphenolen mit Dihalogen-diarylketonen in einem polaren Lösungsmittel hergestellt werden, (siehe beispielsweise GB-PS 1 078 234), wobei die Dialkalisalze der Diphenole auch in situ erzeugt werden können.

Die erfindungsgemäßen Polyetherketone können ebenfalls nach dieser Methode hergestellt werden, wobei als polares Lösungsmittel bevorzugt am Stickstoff C₁-C₅-alkyl-substituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff C₁-C₅-alkylsubstituierte Pyrrolidone, wie N-Methylpyrrolidon, N,N-Dimethylformamid, N,N-Dimethylacetamid, Dimethylsulfoxid, Dimethylsulfon, Sulfolan und Tetramethylharnstoff eingesetzt werden. Es können anteilig, z. B. 0,1 bis 200 Gew.-%, bezogen auf das Gewicht des polaren Lösungsmittels, andere weniger polare Lösungsmittel mitverwendet werden, z.B. aromatische Kohlenwasserstoffe, wie Toluol, Xylol, Mesitylen, Chlorbenzol oder aliphatische Kohlenwasserstoffe wie Benzine, Cyclohexan.

Gegenstand dieser Erfindung ist auch ein Verfahren zur Herstellung der erfindungsgemäßen Polyetherketone mit der wiederkehrenden Struktureinheit der Formel (VIII) durch Umsetzung von Dialkalidiphenolaten der Formel (Xb)

Alkali-O-E-O-Alkali (Xb)

mit Dihalogen-diaryl-Ketonen der Formel (IX) 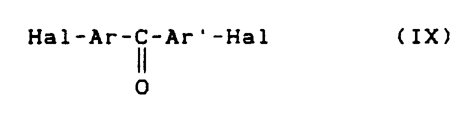
mit Ar und Ar' = gleiche oder verschiedene difunktionelle, aromatische Reste mit 6 bis 50 C-Atomen und Hal = Halogen wie Fluor, Chlor, Brom, bevorzugt Fluor und Chlor
in Lösungsmitteln, das dadurch gekennzeichnet ist, daß (jeweils bezogen auf die Gesamtmenge an Bisphenolen) 5 bis 90 Mol-%, vorzugsweise 20 bis 80 Mol-% und insbesondere 30 bis 75 Mol-% der Dialkalidiphenolate der Formel (Xb) der Formel (Ib) 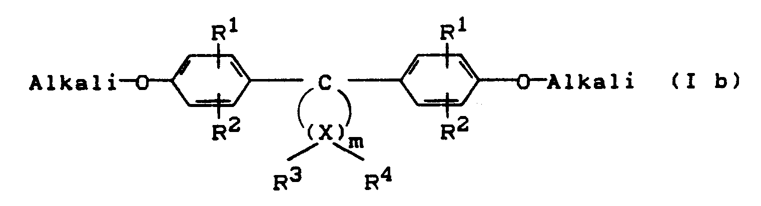
entsprechen,
worin X, R¹, R²,R³, R⁴ und m die für die Formel (I) genannte Bedeutung haben, daß 10 bis 95 Mol-%, vorzugsweise 20 bis 80 Mol-% und insbesondere 25 bis 70 Mol-% der Dialkalidiphenolate der Formel (Xb) der Formel (IIb) 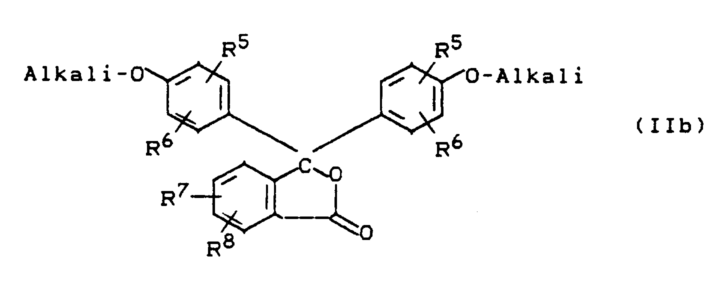
entsprechen, worin R⁵ bis R⁸ die für die Formel (II) genannte Bedeutung haben, und daß die Umsetzung in einem polaren Lösungsmittel wie N-alkylierten Caprolactamen oder N-alkylierten Pyrrolidonen, vorzugsweise in N-alkylierten Pyrrolidonen als polaren Lösungsmitteln durchgeführt wird.

Neben den Diphenolat-Resten der Formel Ia und IIa können die erfindungsgemäßen Polyetherketone auch von anderen Diphenolen der Formel HO-E-OH (X) abgeleitete Diphenolat-Reste enthalten, und zwar kann deren Menge 0 bis 85 Mol-%, bevorzugt 0 bis 60 Mol-% und besonders bevorzugt 0 bis 45 Mol-% aller Diphenolatreste sein. (Diese Mengen ergeben sich aus den erforderlichen Minimalmengen von Diphenolatresten der Formeln Ia und IIa).

Die Formeln (X), (Xa) und (Xb) stellen jeweils das Diphenol, den daraus abgeleiteten Diphenolatrest und das entsprechende Di-alkalisalz dar.

Geeignete Diphenole der Formel (X) sind z.B.
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole (X) sind z.B. in den US-PS 3 028 365, 2 999 835, 3 148 172, 3 275 601, 2 991 273, 3 271 367, 3 062 781, 2 970 131 und 2 999 846, in den DE-OS 1 570 703, 2 063 050, 2 063 052, 2 211 0956, der FR-PS 1 561 518 und in der Monographie "H. Schnell, Chemistry and Physics of Polycarbonates, Interscience Publishers, New York 1964", beschrieben.

Bevorzugte andere Diphenole (X) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4'-Dihydroxydiphenylsulfon.

Besonders bevorzugte andere Diphenole (X) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
4,4'-Dihydroxydiphenylsulfon.

Sie können einzeln oder im Gemisch eingesetzt werden.

Geeignete Dihalogendiarylketone (IX) sind:
4,4'-Dichlorbenzophenon
4-Chlor-4'-Fluorbenzophenon
4,4'-Difluorbenzophenon
4,4'-Dichlorterephthalophenon 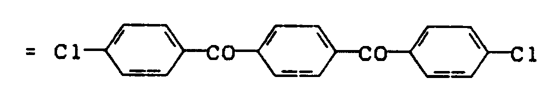
4,4'-Difluorterephthalophenon 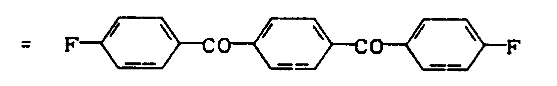
4,4'-Dichlorisophthalophenon 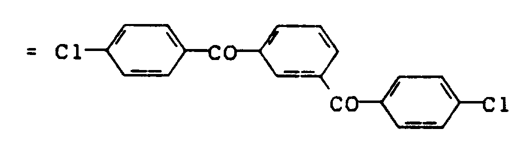
4,4'-Difluorisophthalophenon 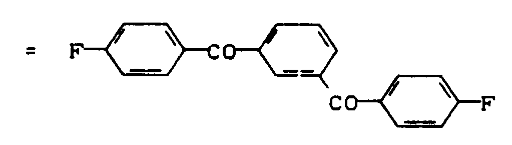
4,4'-Bis-(p-chlorbenzoyl)-diphenylether 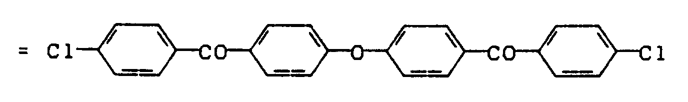
4,4'-Bis-(p-fluorbenzoyl)-diphenylether 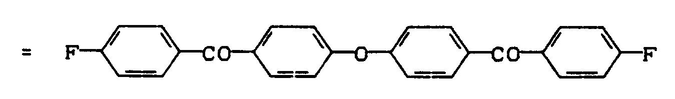
3,3'-Dinitro-4,4'-dichlorbenzophenon
3,3'-Dinitro-4,4'-difluorbenzophenon
4,4'-Bis-(p-chlorbenzoyl)-biphenyl 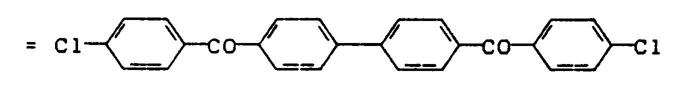
4,4'-Bis-(p-fluorbenzoyl)-biphenyl 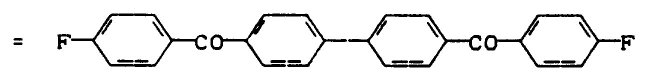
2,8-Bis-(p-chlorbenzoyl)-diphenylenoxid 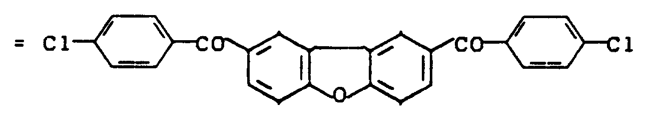
4,4'-Bis-(p-halogenbenzoyl)-diphenylmethan-derivate der Formel 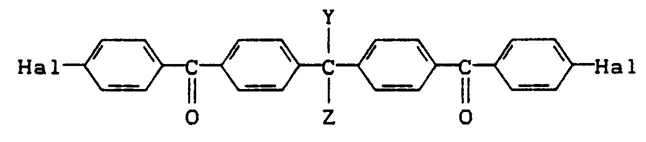
mit Y, Z als gleichen oder verschiedenen C₁-C₉-aliphatischen, C₅-C₆-cycloaliphatischen, C₆-C₁₀-aromatischen oder C₇-C₁₂ araliphatischen Resten oder Wasserstoff und Hal = Fluor oder Chlor, z. B. 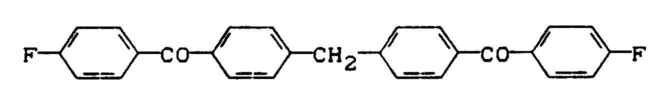
Der bevorzugte Rest Ar und Ar' in der Formel (IX) ist somit der p-Phenylenrest, der auch substituiert sein kann, z.B. mit Alkyl oder Nitrogruppen substituierte p-Phenylenreste oder Reste der Formel 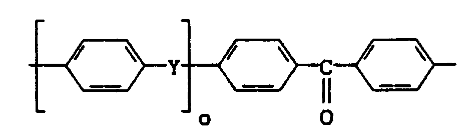
mit y = -O-, CH₂, -CO-, Einfachbindung und o = 0 oder 1 und Hal = Fluor oder Chlor.

Als Alkali in den Dialkaliphenolaten (I b), (II b) und (X b) dient vorzugsweise Natrium oder Kalium.

Als Halogen in den Dihalogendiarylketonen (IX) dient Fluor, Chlor und Brom, vorzugsweise Fluor und Chlor.

Bevorzugte, erfindungsgemäße Polyetherketone sind solche, die mindestens 10 Mol-% wiederkehrende Struktureinheiten der Formel 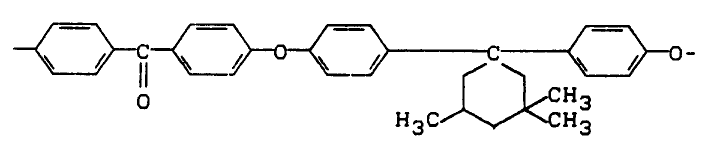
und mindestens 10 Mol-% wiederkehrende Struktureinheiten der Formel 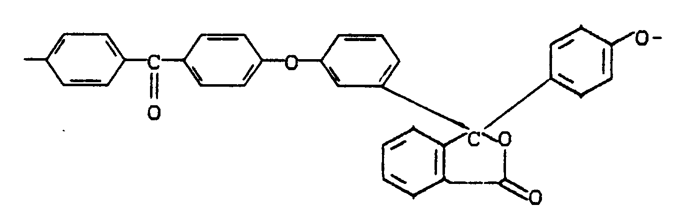
enthalten und ein Molekulargewicht M̅_{w} von über 3000 g/mol aufweisen (Gewichtsmittel).

Erfindungsgemäß können die aromatischen Polyetherketone bei Temperaturen von 130°C bis 350°C, bevorzugt 145°C bis 280°C, und bei Drucken von 0,8 bis 10 bar, bevorzugt 1 bis 3 bar, insbesondere bei atmosphärischem Umgebungsdruck hergestellt werden.

Das molare Mengenverhältnis der Alkalidiphenolate (Ib), (IIb) und (X b) zu den Dihalogen-diaryl-ketonen (IX) ist 0,67 bis 2, bevorzugt 0,8 bis 1,2, besonders bevorzugt 0,95 bis 1,05, wobei für hohe Molekulargewichte ein Verhältnis von 1 oder sehr nahe bei 1 gewählt werden muß.

Die Menge an polaren Lösungsmitteln beträgt 0,5 bis 50, bevorzugt 2 bis 20 Gewichtsteile, bezogen auf das Gesamtgewicht der Polyetherketonrohstoffe (I), (II), (X) und (IX).

Die erfindungsgemäßen Polyetherketone können z. B. wie folgt aus den erhaltenen Reaktionsgemischen gewonnen werden:
Man verdünnt das Reaktionsgemisch, insbesondere wenn sehr hochviskose Lösungen vorliegen, z. B. mit dem polaren Reaktions-Lösungsmittel oder einem anderen Lösungsmittel für das Polyetherketon, und filtriert. Nach Neutralisation des Filtrats mit einer geeigneten Säure, z. B. Essigsäure, wird das Polyetherketon durch Eingießen in ein geeignetes Fällungsmedium, z. B. Wasser oder Alkohole, wie z. B. Methanol oder Isopropanol oder Wasser-Alkohol-Gemische, z. B. H₂O/Methanol 1 : 1, ausgefällt, isoliert und anschließend getrocknet.

Die erfindungsgemäßen Polyetherketone sind thermoplastische Kunststoffe mit hoher Wärmeformbeständigkeit bei ausgezeichneter Gaspermeabilität und vorzüglicher Flammfestigkeit.

Sie können beispielsweise verarbeitet werden durch Extrusion, Spritzgießen, Sintern oder Verpressen.

Es können beliebige Formkörper hergestellt werden. Diese sind überall dort einsetzbar, wo Polyetherketone hoher Formstabilität gefordert sind, also beispielsweise auf dem Gebiet der Elektrotechnik und Elektronik, z.B. für Leiterplatten, Fahrzeugbau incl. Luft- und Raumfahrt, für Sportgeräte, Funk-tionsteile und Geschirr, für Mikrowellenherde, sterilisierbare medizinische Geräte, Kaffeemaschinenteile, Eierkocher, Heißwasserbehälter, -leitungen und -pumpen, Haartrockner und ähnliches mehr. Besonders geeignet sind die erfindungsgemäßen Polyetherketone jedoch für Folien und Membranen, für die bei hoher Flammwidrigkeit und thermischer und mechanischer Stabilität eine gute Gaspermeabilität gefordert wird.

Den erfindungsgemäßen Polyetherketonen können noch übliche Additive wie Weichmacher, Entformungsmittel, Stabilisatoren wie z. B. UV-Absorber und Antioxidantien, Intumeszenzhilfsmittel (Flammschutzmittel), Verstärkungsfasern wie Glasfasern, Kohlenstoffasern oder Aramidfasern, Füllstoffe, anorganische oder organische Pigmente, keramische Grundstoffe, Ruß etc. zugesetzt werden, bevorzugt in Mengen von 0 bis 80 Gew.-%, insbesondere von 0 bis 60 Gew.-%, bezogen auf Polyetherketon = 100 %, zweckmäßig vor der Verarbeitung der erfindungsgemäßen Polyetherketone zu Formkörpern.

Die niedermolekularen erfindungsgemäßen Polyetherketone eignen sich über ihre funktionellen Endgruppen (Halogen oder Hydroxyl) besonders für den Einbau in Blockcopolymere in Verbindung mit anderen co-kondensierbaren Bausteinen.

Die erfindungsgemäßen Polyetherketone können auch mit anderen Polymeren in an sich bekannter Weise abgemischt und zu Formteilen verarbeitet werden.

In den folgenden Beispielen wurde die Permeationseigenschaft wie folgt gemessen:
Der Durchgang eines Gases durch eine dichte Polymermembran wird durch einen Lösungs-Diffusionsvorgang beschrieben. Die kennzeichnende Konstante für diesen Prozeß ist der Permeationskoeffizient P, der angibt, welches Gasvolumen V bei gegebener Druckdifferenz ΔP in einer bestimmten Zeit t durch eine Folie bekannter Fläche F und Dicke d hindurchtritt. Für den stationären Zustand läßt sich aus den Differentialgleichungen des Permationsvorgangs ableiten: 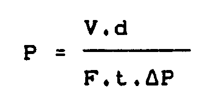
Zusätzlich ist die Permeation abhängig von der Temperatur und von dem Wassergehalt des Gases.

Die Meßanordnung besteht aus einem thermostatisierten Zwei-Kammer-System. Die eine Kammer ist für die Aufnahme des Vorgabegases und die andere für die Aufnahme des Permeates ausgelegt. Die Kammern sind durch die zu messende Polymermembran getrennt.

Beide Kammern werden auf 0,001 mbar evakuiert und die Vorgabekammer dann mit Gas gefüllt. Das permeierte Gas bewirkt dann in der Permeatkammer (bei konstantem Volumen) einen Druckanstieg, der mit einem Druckaufnehmer, z.B. Baratron der Firma MKS, in Abhängigkeit von der Zeit bis zum stationären Zustand registriert wird. Hieraus wird V bei Normtemperatur nach der o.a. Formel errechnet, t ist bekannt. Die vorgegebene Druckdifferenz unter Berücksichtigung des äußeren Luftdruckes wird jeweils auf 10 000 Pa eingestellt. Die Membranfläche F ist bekannt. Die Membrandicke d wird mittels Mikrometerschraube als Mittel aus 10 unabhängig über die Membranfläche verteilten Dickenmessungen ermittelt.

Aus diesen Größen ist der Permeationskoeffizient P zu bestimmen in der Dimension 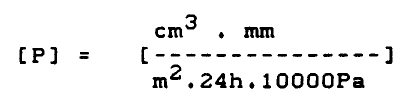
wobei auf eine Membrandicke von 1 mm bezogen ist. Weitere Meßparameter sind;
- Temperatur:: 25°C (Genauigkeit 1°C)
- rel. Gasfeuchte:: 0 %
Zur qualitativen Beschreibung des Meßvorgangs siehe auch EP-A 0 242 147, Beispiel 1 (S.15).

### Beispiele:

1. Herstellung eines Bisphenols der Formel (I) 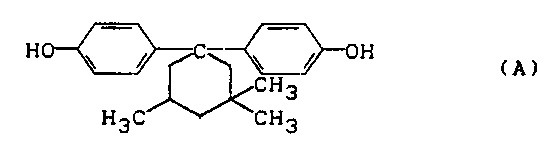 In einem 1-Liter-Rundkolben mit Rührer, Tropftrichter, Thermometer, Rückflußkühler und Gaseinleitungsrohr werden 7,5 Mol (705 g) Phenol und 0,15 Mol (30,3 g) Dodecanthiol bei 28 bis 30°C mit trockenem HCl-Gas gesättigt. Zu dieser Lösung werden bei 28 bis 30°C innerhalb 3 Stunden eine Mischung von 1,5 Mol Dihydroisophoron (210 g) und 1,5 Mol (151 g) Phenol zugetropft, wobei weiterhin HCl-Gas durch die Reaktionslösung geleitet wird. Nach beendeter Zugabe wird weitere 5 Stunden HCl-Gas eingeleitet. Zur Vervollständigung der Reaktion läßt man 8 Stunden bei Zimmertemperatur stehen. Anschließend wird überschüssiges Phenol durch Wasserdampf-Destillation entfernt. Der verbleibende Rückstand wird zweimal mit je 500 ml Petrolether (60-90) und einmal mit 500 ml Methylenchlorid heiß extrahiert und abfiltriert. Ausbeute: 370 g entspricht 79 %. Schmelzpunkt: 205-207°C
2. Herstellung eines erfindungsgemäßen Copolyetherketons aus 40 Mol-% Phenolphthalein und 60 Mol-% Bisphenol der Formel (A).
In einer mit Stickstoff gespülten Rührapparatur, die mit einem Wasserabscheider versehen ist, werden 18,62 g (0,06 Mol) des Bisphenols der Formel (A) 12,73 g (0,04 Mol) Phenolphthalein, 21,82 g 4,4'-Difluorbenzophenon (0,1 Mol), 200 ml N-Methylpyrrolidon, 100 ml Toluol und 18 g Kaliumcarbonat vorgelegt. Es wird destillativ azeotrop entwässert bis der Ansatz wasserfrei ist. Durch Abdestillieren von Toluol wird die Sumpftemperatur innerhalb einer Stunde auf 180°C erhöht. Der Ansatz wird 4 Stunden bei 180°C gerührt und anschließend 1 Stunde lang auf 190-195°C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1:1) daraus isoliert. Zur weiteren Reinigung wird das Polymer in Methylenchlorid gelöst und anschießend in Methanol gefällt. Abschließend wird 14 Stunden bei 120°C im Vakuum getrocknet. Ausbeute: 37,52 g; relative Viakosität (ηᵣₑₗ) gemessen in Methylenchlorid bei 25°C und einer Polymerkonzentration von 5 g pro Liter:1,513, Glastemperatur, bestimmt mit Hilfe der DSC-Methode bei einer Aufheizgeschwindigkeit von 20 K/min:221°C.

| Permeationskoeffizienten P gegenüber | N₂ | O₂ | CO₂ |
|---|---|---|---|
| Beispiel 2 | 122 | 765 | 4307 |
| Vergleich* | | 116 | 382 |

| | | | |
|---|---|---|---|
| * Vergleich: Polyetherketon aus Phenolphthalein und 4,4'-Difluorbenzophenon, ηᵣₑₗ = 1,808 | | | |

3. Herstellung eines erfindungsgemäßen Copolyetherketons aus 90 Mol-% Phenolphthalein und 10 Mol-% Bisphenol der Formel (A).
Entsprechend Beispiel 2 werden 3,10 g (0,01 Mol) des Bisphenols der Formel (A), 28,64 g (0,09 Mol) Phenolphthalein und 21,82 g (0,1 Mol) 4,4'-Difluorbenzophenon zum Polyetherketon umgesetzt und analog aufgearbeitet. Ausbeute: 34,0 g, relative Viskosität gemessen in Methylenchlorid bei 25°C und einer Polymerkonzentration von 5 g pro Liter: 1,214 Glastemperatur, bestimmt mit Hilfe der DSC-Methode bei einer Aufheizgeschwindigkeit von 20 K/min:228°C.

| Permeationskoeffizienten P gegenüber | N₂ | O₂ | CO₂ |
|---|---|---|---|
| Beispiel 3 | 60 | 410 | 2417 |
| Vergleich* | | 116 | 382 |

| | | | |
|---|---|---|---|
| * Vergleich: Polyetherketon aus Phenolphthalein und 4,4'-Difluorbenzophenon, ηᵣₑₗ = 1,808. | | | |

4. Herstellung eines erfindungsgemäßen Copolyetherketons aus 50 Mol-% Phenolphthalein und 50 Mol-% Bisphenol der Formel (A).
In einer mit Stickstoff gespülten Rührapparatur, die mit einem Wasserabscheider versehen ist, werden 15,52 g (0,05 Mol) des Bisphenols der Formel (A), 15,91 g (0,05 Mol) Phenolphthalein, 21,82 g 4,4'-Difluorbenzophenon (0,1 Mol), 200 ml N-Methylpyrrolidon, 100 ml Toluol und 18 g Kaliumcarbonat vorgelegt. Es wird destillativ azeotrop entwässert bis der Ansatz wasserfrei ist. Durch Abdestillieren von Toluol wird die Sumpftemperatur innerhalb einer Stunde auf 180°C erhöht. Der Ansatz wird 4 Stunden bei 180°C gerührt und anschließend 1 Stunde lang auf 190-195°C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1:1) daraus isoliert. Zur weiteren Reinigung wird das Polymer in Methylenchlorid gelöst und anschießend in Methanol gefällt. Abschließend wird 14 Stunden bei 120°C im Vakuum getrocknet. Ausbeute: 33,2 g; relative Viskosität (ηᵣₑₗ) gemessen in Methylenchlorid bei 25°C und einer Polymerkonzentration von 5 g pro Liter: 1,23, Glastemperatur, bestimmt mit Hilfe der DSC-Methode bei einer Aufheizgeschwindigkeit von 20 K/min:223°C.
5. Herstellung eines erfindungsgemäßen Copolyetherketons aus 80 Mol-% Phenolphthalein, 10 Mol-% Bisphenol der Formel (A) und 10 Mol-% Bisphenol A.
Entsprechend Beispiel 2 werden 2,28 g (0,01 Mol) Bisphenol A, 3,10 g (0,01 Mol) des Bisphenols der Formel (A), 25,46 g (0,08 Mol) Phenolphthalein und 21,82 g (0,1 Mol) 4,4'-Difluorbenzophenon zum Polyetherketon umgesetzt und analog aufgearbeitet. Ausbeute; 33,9 g, relative Viskosität gemessen in Methylenchlorid bei 25°C und einer Polymerkonzentration von 5 g pro Liter: 1,25 Glastemperatur, bestimmt mit Hilfe der DSC-Methode bei einer Aufheizgeschwindigkeit von 20 K/min:226°C.

## Patentansprüche

1. Aromatische Polyetherketone mit der wiederkehrenden Struktureinheit
-O-E-O-E'- (VIII)
worin -E' - ein zweibindiger Rest eines aromatischen Ketons der Formel (IXa) ist 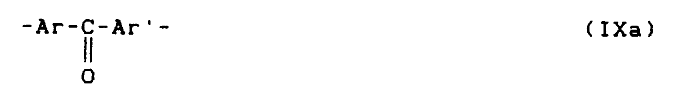 mit -Ar- und Ar' gleiche oder verschiedene difunktionelle aromatische Reste mit 6 bis 50 C-Atomen,
und worin -O-E-O- (X a) ein zweibindiger Diphenolat-Rest ist, dadurch gekennzeichnet, daß 5 bis 90 Mol-% der Diphenolat-Reste der Formel (Xa) solche der Formel (Ia) sind 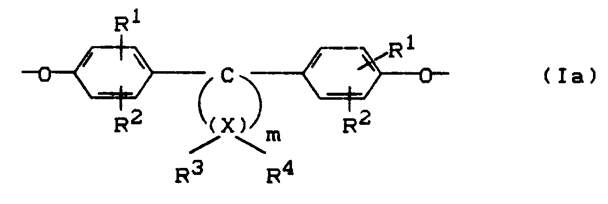 worin
R¹ und R² unabhängig voneinander Wasserstoff, Halogen, C₁-C₈-Alkyl, C₅-C₆-Cycloalkyl, C₆-C₁₀-Aryl und C₇-C₁₂-Aralkyl,
m eine ganze Zahl von 4 bis 7,
R³ und R⁴, für jedes X individuell wählbar, unabhängig voneinander Wasserstoff oder C₁-C₆-Alkyl,
und
X Kohlenstoff bedeuten,
mit der Maßgabe, daß an mindestens einem Atom X R³ und R⁴ gleichzeitig Alkyl bedeuten, 10 bis 95 Mol-% der Diphenolat-Reste der Formel (Xa) solche der Formel (IIa) sind, 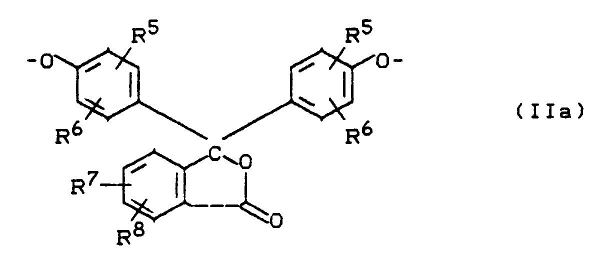 worin R⁵ bis R⁸ die für R¹ und R² genannte Bedeutung haben, jedoch unabhängig von R¹ und R² sind und 0 bis 85 Mol-% der Diphenolat-Reste der Formel (Xa) von anderen Diphenolen abgeleitet sind.

2. Aromatische Polyetherketone gemäß Anspruch 1 mit einem mittleren Molekulargewicht M̅_{w} von 1000 bis 500.000.

3. Aromatische Polyetherketone gemäß Anspruch 1, in denen 20 Mol-% bis 80 Mol-% der Diphenolat-Reste der Formel (Xa) Diphenolat-Reste der Formel (Ia) und 20 Mol-% bis 80 Mol-% der Diphenolat-Reste (Xa) Diphenolat-Reste der Formel (IIa) sind, und 0 bis 60 Mol-% der Diphenolat-Reste der Formel (Xa) von anderen Diphenolen abgeleitet sind.

4. Aromatische Polyetherketone gemäß Anspruch 1, in denen 30 Mol-% bis 75 Mol-% der Diphenolat-Reste der Formel (Xa) Diphenolat-Reste der Formel (Ia) und 25 Mol-% bis 70 Mol-% der Diphenolat-Reste der Formel (Xa) Dihenolat-Reste der Formel (IIa) sind, und 0 bis 45 Mol-% der Diphenolat-Reste der Formel (Xa) von anderen Diphenolen abgeleitet sind.

5. Verfahren zur Herstellung der Polyetherketone des Anspruchs 1, durch Umsetzung von Dialkalidiphenolaten der Formel (Xb) (Alkali-O-E-O-Alkali) mit Dihalogen-diaryl-Ketonen der Formel (IX) 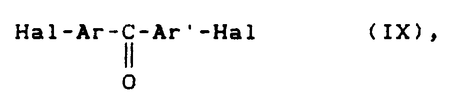 worin -Ar- und -Ar'- gleiche oder verschiedene difunktionelle aromatische Reste mit 6 bis 50 C-Atomen und Hal Halogen wie Fluor, Chlor, Brom bedeuten, dadurch gekennzeichnet, daß 5 Mol-% bis 90 Mol-% der Dialkalidiphenolate der Formel (Xb) solche der Formel (Ib) 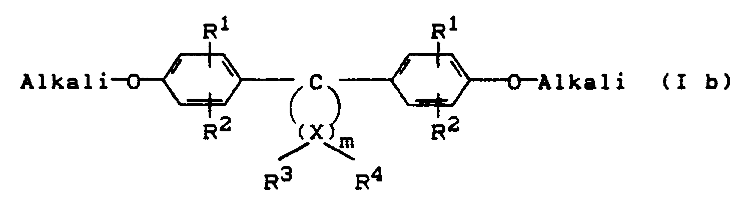 sind,
worin X, R¹, R², R³, R⁴ und m die für Formel I in Anspruch 1 genannte Bedeutung haben, 10 bis 95 Mol-% der Dialkalidiphenolate der Formel (Xb) der Formel (IIb) 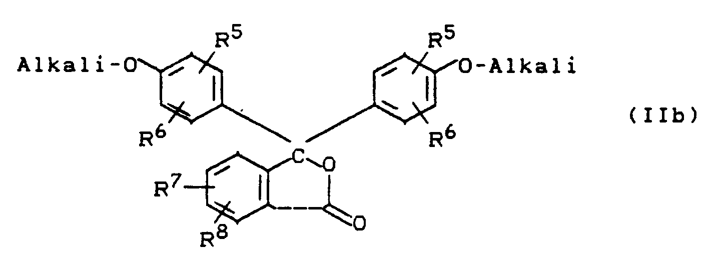 entsprechen, worin R⁵ bis R⁸ die für R¹ und R² genannte Bedeutung haben, aber unabhängig von R¹ und R² sind, und 0 bis 85 Mol-% der Diphenolat-Reste der Formel (Xa) von anderen Diphenolen der Formel (X) HO-E-OH abgeleitet sind und daß die Umsetzung in einem polaren Lösungsmittel durchgeführt wird.

6. Verwendung von Gemischen von Diphenolen der Formeln (I) und (II) 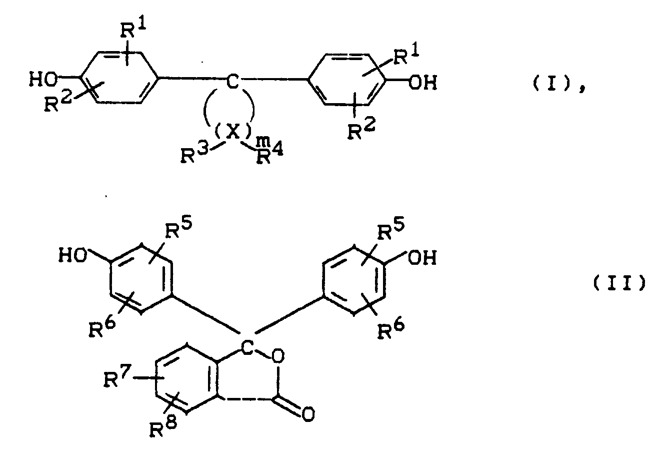 worin
R¹ und R² unabhängig voneinander Wasserstoff, Halogen, C₁-C₈-Alkyl, C₅-C₆-Cycloalkyl, C₆-C₁₀-Arylund C₇-C₁₂-Aralkyl,
m eine ganze Zahl von 4 bis 7,
R³ und R⁴, für jedes X individuell wählbar, unabhängig voneinander Wasserstoff oder C₁-C₆-Alkyl
und
X Kohlenstoff bedeuten,
mit der Maßgabe, daß an mindestens einem Atom X R³ und R⁴ gleichzeitig Alkyl bedeuten, und R⁵, R⁶, R⁷, R⁸ die für R¹ und R² angegebene Bedeutung haben aber unabhängig von R¹ und R² sind, im Molverhältnis Diphenole I: Diphenole II von 1:19 bis 9:1 zur Herstellung von aromatischen Polyetherketonen.

## Claims

1. Aromatic polyether ketones containing the following recurring structural unit:
-O-E-O-E'- (VIII)
in which -E'- is a two-bond group of an aromatic ketone corresponding to formula (IXa) 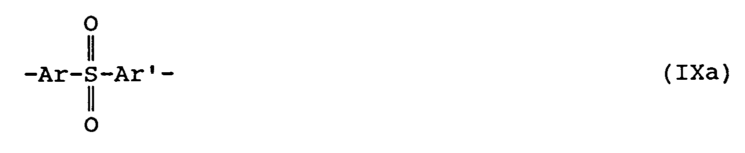 in which
Ar and Ar' may be the same or different and represent di-functional aromatic radicals containing from 6 to 50 carbon atoms
and in which
-O-E-O- (Xa)
is a two-bond diphenolate residue,
characterized in that 5 to 90 mol-% of the diphenolate residues of formula (Xa) are those corresponding to formula (Ia) 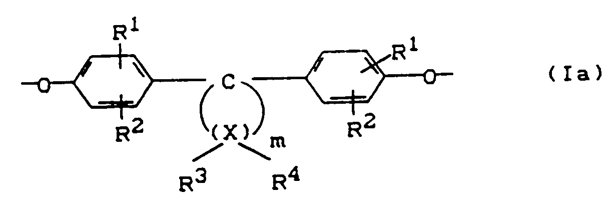 in which
R¹ and R² independently of one another represent hydrogen, halogen, C₁₋₈ alkyl, C₅₋₆ cycloalkyl, C₆₋₂₀ aryl and C₇₋₁₂ aralkyl,
m is an integer of 4 to 7,
R³ and R⁴ may be individually selected for each X and independently of one another represent hydrogen or C₁₋₆ alkyl and
X represents carbon,
with the proviso that, at at least one atom X, both R³ and R⁴ are alkyl,
10 to 95 mol-% of the diphenolate residues of formula (Xa) are those corresponding to formula (IIa) 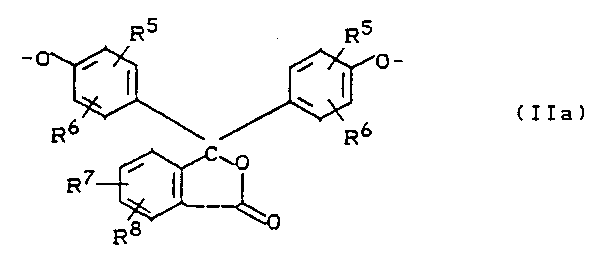 in which R⁵, R⁶, R⁷ and R⁸ have the same meanings as R¹ and R², but are independent of R¹ and R²,
and 0 to 85 mol-% of the diphenolate residues (Xa) are derived from other diphenols.

2. Aromatic polyether ketones as claimed in claim 1 having average molecular weights Mw in the from from 1,000 to 500,000 g/ml.

3. Aromatic polyether ketones as claimed in claim 1, in which 20 mol-% to 80 mol-% of the diphenolate residues of formula (Xa) are diphenolate residues of formula (Ia), 20 mol-% to 80 mol-% of the diphenolate residues of formula (Xa) are diphenolate residues corresponding to formula (IIa) and 0 to 60 mol-% of the diphenolate residues of formula (Xa) are derived from other diphenols.

4. Aromatic polyether ketones as claimed in claim 1, in which 30 mol-% to 75 mol-% of the diphenolate residues of formula (Xa) are diphenolate residues of formula (Ia), 25 mol-% to 70 mol-% of the diphenolate residues of formula (Xa) are diphenolate residues corresponding to formula (IIa) and 0 to 45 mol-% of the diphenolate residues of formula (Xa) are derived from other diphenols.

5. A process for the production of the polyether ketones claimed in claim 1 by reaction of dialkali diphenolates of formula (Xb) (alkali-O-ε-O-alkali) with dihalodiaryl ketones corresponding to formula (IX): 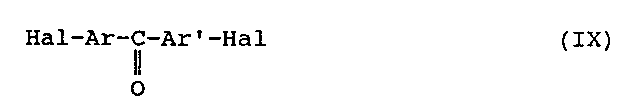 in which Ar and Ar' may be the same or different and represent difunctional aromatic radicals containing from 6 to 50 carbon atoms and Hal represents halogen, such as fluorine, chlorine, bromine,
characterized in that 5 to 90 mol-% of the dialkali diphenolates of formula (Xb) are those corresponding to formula (Ib): 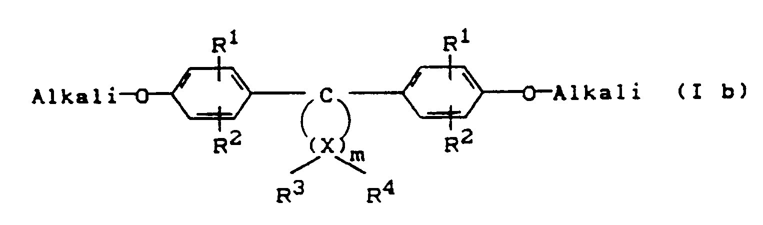 in which X, R¹, R², R³, R⁴ and m are as defined for formula (Ia) in claim 1,
10 to 95 mol-% of the dialkali phenolates of formula (Xb) are those corresponding to formula (IIb): 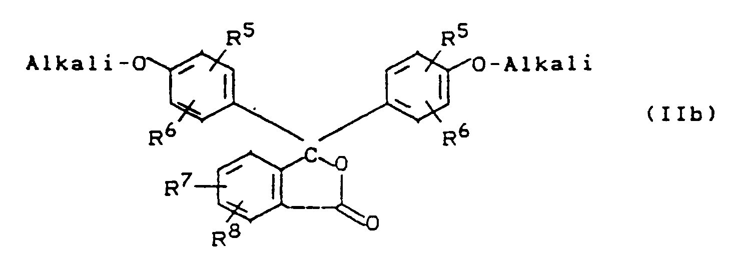 in which R⁵ to R⁸ have the meanings defined for R¹ and R² but are independent of R¹ and R²,
and 0 to 85 mol-% of the diphenolate residues of formula (Xa) are derived from other diphenols and in that the reaction is carried out in polar solvents.

6. The use of mixtures of diphenols corresponding to formulae (I) and (II) 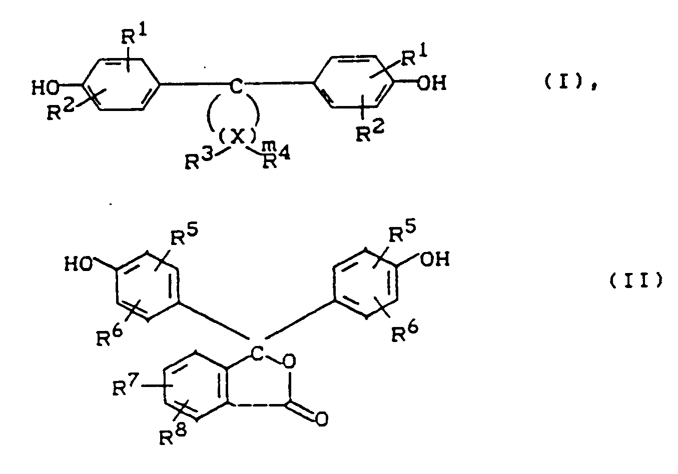 in which
R¹ and R² independently of one another represent hydrogen, halogen, C₁₋₈ alkyl, C₅₋₆ cycloalkyl, c₆₋₁₀ aryl and C₇₋₁₂ aralkyl,
m is an integer of from 4 to 7,
R³ and R⁴ may be individually selected for each X and independently of one another represent hydrogen or C₁₋₆ alkyl and
X represents carbon,
with the proviso that, at at least one atom X, both R³ and R⁴ are alkyl,
and R⁵, R⁶, R⁷ and R⁸ have the same meanings as R¹ and R², but are independent of R¹ and R², in a molar ratio of diphenols (I) to diphenols (II) of from 1:19 to 9:1 for the production of aromatic polyether ketones.

## Revendications

1. Polyéthercétones aromatiques à motif de structure répété
-O-E-O-E'- (VIII)
dans lequel
-E'- représente un radical divalent d'une cétone aromatique de formule IXa: 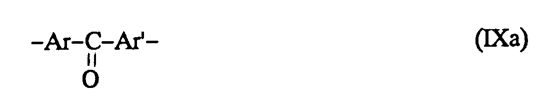 dans laquelle -Ar- et -Ar'- représentent des radicaux aromatiques difonctionnels identiques ou différents en C₆-C₅₀, et -O-E-O- (Xa) représente un radical divalent de diphénolate, caractérisées en ce que 5 à 90 mol % des radicaux de diphénolates de formule Xa répondent à la formule Ia : 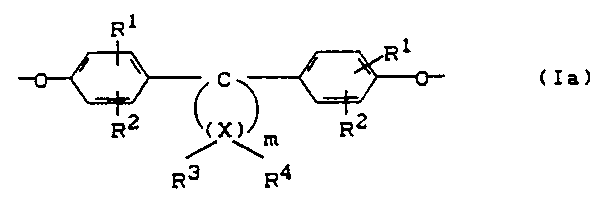 dans laquelle
R¹ et R² représentent chacun, indépendamment l'un de l'autre, l'hydrogène, un halogène, un groupe alkyle en C₁-C₈, cycloalkyle en C₅-C₆, aryle en C₆-C₁₀ ou aralkyle en C₇-C₁₂,
m est un nombre entier allant de 4 à 7,
R³ et R⁴, qui peuvent être choisis individuellement peur chacun des atomes X, représentent chacun, indépendamment l'un de l'autre, l'hydrogène ou un groupe alkyle en C₁-C₆, et
X représente le carbone,
sous reserve que, sur au moins un atome X, R³ et R⁴ représentent tous deux des groupes alkyle, 10 à 95 mol % des radicaux de diphénolates de formule Xa répondent à la formule IIa: 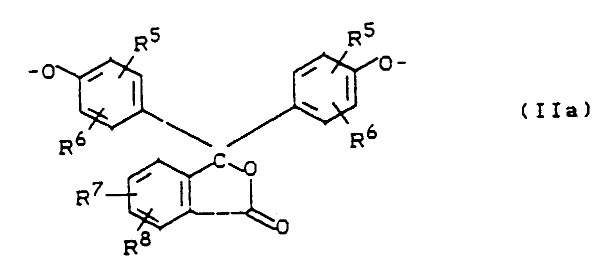 dans laquelle R⁵ à R⁸ ont les significations indiquées pour R¹ et R² mais sont indépendants de R¹ et R², et 0 à 85 mol % des radicaux de diphénolates de formule Xa dérivent d'autres diphénols.

2. Polyéthercétones aromatiques selon revendication 1, ayant un poids moléculaire moyen M̅_{w} de 1 000 à 500 000.

3. Polyéthercétones aromatiques selon revendication 1, dans lesquelles 20 mol % à 80 mol % des radicaux de diphénolates de formule Xa sont des radicaux de diphénolates de formule Ia, 20 à 80 mol % des radicaux de diphénolates de formule Xa sont des radicaux de diphénolates de formule IIa, et 0 à 60 mol % des radicaux de diphénolates de formule Xa dérivent d'autres diphénols.

4. Polyéthercétones aromatiques selon revendication 1, dans lesquelles 30 mol % à 75 mol % des radicaux de diphénolates de formule Xa sont des radicaux de diphénolates de formule Ia, 25 à 70 mol % des radicaux de diphénolates de formule Xa sont des radicaux de diphénolates de formule IIa, et 0 à 45 mol % des radicaux de diphénolates de formule Xa dérivent d'autres diphénols.

5. Procédé de préparation de polyéthercétones de la revendication 1 par réaction de diphénolates dialcalins de formule Xb (alcali-O-E-O-alcali) avec des dihalogénodiarylcétones de formule IX : 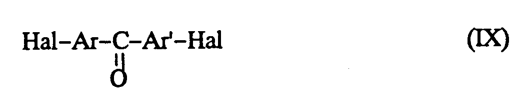 dans laquelle -Ar- et -Ar'- représentent des radicaux aromatiques difonctionnels identiques ou différents en C₆-C₅₀ et Hal représente un halogène, tel que le fluor, le chlore, le brome, caractérisé en ce que 5 mol % à 90 mol % des diphénolates dialcalins de formule Xb répondent à la formule Ib : 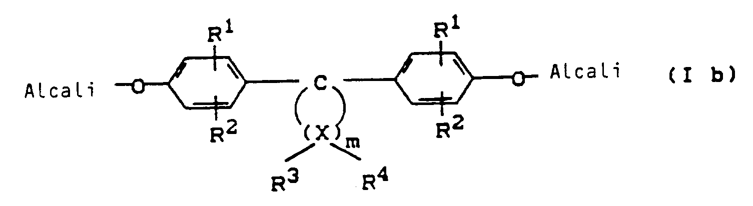 dans laquelle X, R¹, R², R³, R⁴ et m ont les significations indiquées en référence à la formule I dans la revendication 1, 10 à 95 mol % des diphénolates dialcalins de formule Xb répondent à la formule IIb : 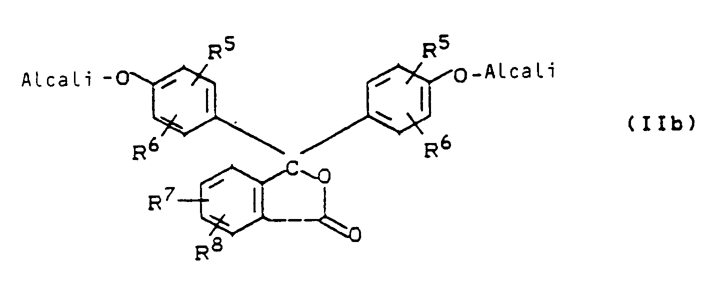 dans laquelle R⁵ à R⁸ ont les significations indiquées pour R¹ et R², mais sont indépendants de R¹ et R², et 0 à 85 mol % des radicaux de diphénolates de formule Xa dérivent d'autres diphénols de formule X, HO-E-OH, et en ce que la réaction est effectuée dans un solvant polaire.

6. Utilisation de mélanges de diphénols de formules I et II : 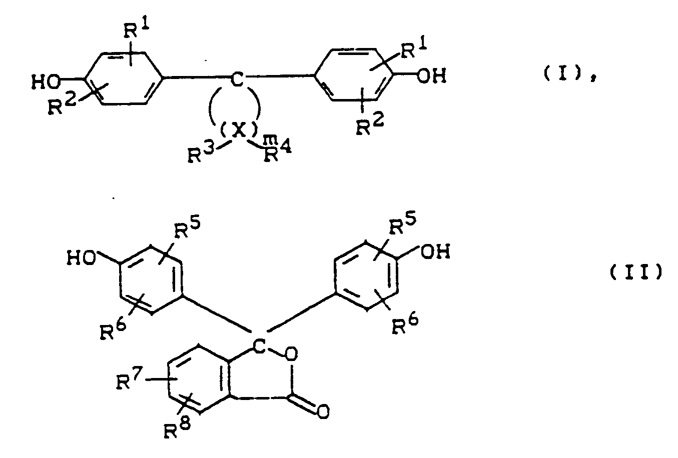 dans lesquelles
R¹ et R² représentent chacun, indépendamment l'un de l'autre, l'hydrogène, un halogène, un groupe alkyle en C₁-C₈, cycloalkyle en C₅-C₆, aryle en C₆-C₁₀ ou aralkyle en C₇-C₁₂,
m est un nombre entier allant de 4 à 7,
R³ et R⁴, qui peuvent être choisis Individuellement pour chacun des atomes X, représentent chacun, Indépendamment l'un de l'autre, l'hydrogène ou un groupe alkyle en C₁-C₆,
et
X représente le carbone,
sous réserve que, sur au moins un atome X, R³ et R⁴ représentent tous deux des groupes alkyle, et R⁵, R⁶, R⁷, R⁸ ont les significations indiquées pour R¹ et R² mais sont indépendants de R¹ et R², à des proportions molaires diphénols I : diphénols II de 1:19 à 9:1, pour la préparation de polyéthercétones aromatiques.
